# EUROPEAN PATENT APPLICATION

(11) **EP 0 896 798 A1**
(43) Date of publication of application: **17.02.1999**
(21) Application number: 98401945.5
(22) Date of filing: 29.07.1998
(51) Int. Cl.: A23P 1/08, A21D 13/00

(54) **Filled dough products comprising a barrier layer**

(30) Priority: 29.07.1997 FR 9709638
(71) Applicant: S.A. Patrick Raulet, 39700 Rochefort sur Nenon (FR)
(72) Inventor: Raulet, Patrick, 25000 Besançon (FR); Brivet, Isabelle, 39100 Crissey (FR); Jean, Emmanuelle, 39700 Eclans (FR)
(74) Representative: Wagret, Frédéric

(57) **Abrégé**

L'invention concerne une composition alimentaire à longue conservation, comprenant une pâte à farine et une garniture intérieure,
caractérisée en ce qu'elle comprend un enrobage apte à isoler ladite garniture de ladite pâte, de manière à permettre la conservation au froid de l'ensemble, ledit emballage étant composé d'au moins deux couches, à savoir une première couche constituant une barrière mécanique (5), et au moins une seconde couche (6,7) constituant barrière à l'eau, et la couche (5) barrière mécanique est réalisée à partir d'un mélange, d'un liant (9) (farine, amidon) et de matière grasse (10) (huile végétale ou animale).

## Description

La présente invention concerne une composition fraîche à consommation différée, susceptible d'être conservée au froid positif ou à l'état surgelé, comprenant une pâte à farine et une garniture intérieure et son procédé de fabrication, prête à cuire pour la consommation.

On entend par pâte à farine tout type de pâte telle que par exemple, pâte feuilletée, brisée, sablée, à croissant, à pain, à pizza, à brioche, à beignet, à choux, pain dit libanais, feuille de brick, pâtes fraîches. De même, le terme garniture intérieure recouvre tout produit ou ensemble de produits alimentaires, tel que par exemple des farces à base de fromage, viande, poisson, fruits, légumes.

De manière connue, de nombreux types de compositions appartenant à la famille décrite ci-dessus sont proposés à la vente.

En dehors des cas de préparations extemporanées, pour la vente quasi-immédiate, ou le lendemain, la conservation au delà de deux jours de telles compositions soulève des difficultés.

En effet, compte tenu des leurs natures fondamentalement différentes, la mise en contact prolongé de la pâte avec la garniture intérieure entraîne une dégradation des qualités organoleptiques et bactériologiques de la composition.

Le problème consiste à pouvoir fabriquer à l'avance ce genre de compositions prêtes à cuire et à consommer, et de plus à les conserver au froid positif et même en surgélation, et ce sans en affecter les caractéristiques gustatives.

La réalisation et la mise en place d'une barrière apte à isoler la pâte et la garniture soulève de nombreuses difficultés, car elle doit répondre à plusieurs conditions.

Tout d'abord, la barrière doit constituer une protection mécanique de la garniture.

Ensuite, la barrière doit empêcher le contact entre la pâte et la garniture en s'opposant à la migration de tous composé, micro-organisme, enzyme, eau, soluté, et ce même dans le cas où la garniture présente une teneur en eau élevée ou une activité enzymatique.

De plus, il est important que la barrière ne soit pas perçue au goût après cuisson.

Par ailleurs, elle doit résister à des conditions de stockage en froid positif (par exemple, trente jours à 12/14°C) et également à l'état surgelé.

L'invention propose une composition, et son procédé de fabrication, qui réponde à l'ensemble de ces conditions.

A cette fin, selon l'invention, la composition alimentaire à longue conservation, comprenant une pâte à farine et une garniture intérieure, est caractérisée en ce qu'elle comprend un enrobage apte à isoler ladite garniture de ladite pâte, de manière à permettre la conservation au froid de l'ensemble.

De préférence, ledit enrobage est composé d'au moins deux couches, à savoir une première couche constituant une barrière mécanique, et au moins une seconde couche constituant barrière à l'eau.

Avantageusement, la barrière mécanique est réalisée à partir d'un mélange, d'un liant (farine, amidon) et de matière grasse (huile végétale ou animale).

Selon une forme de réalisation préférée, la couche formant barrière à l'eau comporte de la matière grasse, et plus particulièrement, elle est réalisée sous la forme de deux films appliqués sur les faces respectivement interne et externe de la couche formant barrière mécanique de l'enrobage.

L'invention concerne également un enrobage pour garniture intérieure d'une composition à base de pâte à farine, comprenant au moins deux couches, à savoir une première couche constituant une barrière mécanique, et une seconde couche constituant barrière à l'eau, et la couche de barrière à l'eau est de préférence réalisée sous la forme de deux films appliqués sur les faces respectivement interne et externe de la couche formant barrière mécanique de l'enrobage.

L'invention concerne également un procédé dé fabrication d'un enrobage pour garniture intérieure d'une composition alimentaire, dans lequel :
- on mélange un liant (farine, amidon, ou mélange des deux) avec de la matière grasse (animale ou végétale) et de l'eau, auquel on ajoute éventuellement un émulsifiant ou d'autres ingrédients;
- on soumet à cuisson le mélange ainsi réalisé, pour former un enrobage délimitant un volume intérieur apte à recevoir ladite garniture;
- on applique sur la paroi interne de l'enrobage, destinée à venir en contact ou placé en regard de la garniture, au moins un premier film (ou film interne) de barrière à l'eau, comprenant de la matière grasse;
- on dispose à l'intérieur du volume défini par l'enrobage la garniture et on scelle les bords de l'enrobage.

De préférence, on enduit ensuite la surface extérieure de l'enrobage fermé, d'un second film ou film externe constituant barrière à l'eau, et comprenant de la matière grasse.

L'invention sera bien comprise à la lumière de la description qui suit se rapportant à des exemples d'illustration mais non limitatifs, en référence aux dessins annexés, dans lesquels :
- La figure 1 est une vue schématique en coupe de la composition de l'invention;
- La figure 2 est une vue en coupe schématique de l'enrobage de la garniture;
- Les figures 3A, 3B, 3C et 3D montrent de manière schématique les étapes successives de fabrication de la couche formant barrière mécanique de l'enrobage;
- La figure 4 montre l'étape de réalisation de la première couche barrière à l'eau;
- La figure 5 montre l'étape de scellement des bords de l'enrobage contenant la garniture; et
- La figure 6 montre l'étape de réalisation de la seconde couche barrière à l'eau.

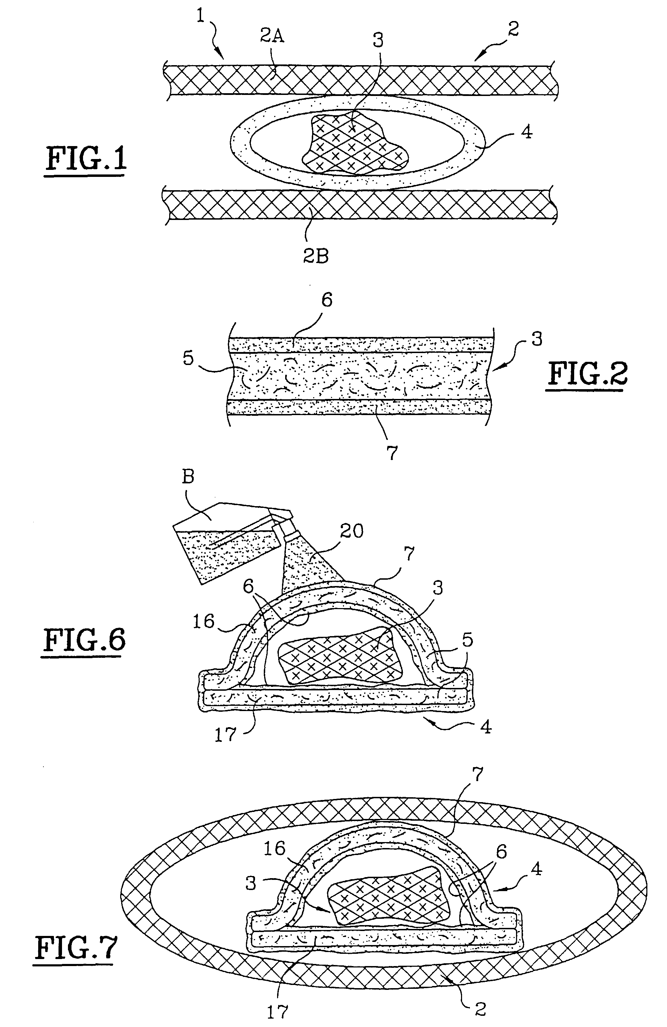

La figure 1 est une vue schématique en coupe de la composition de l'invention, étant entendu que les proportions géométriques ne sont pas respectées pour la clarté du dessin. La composition comporte une pâte à farine comportant deux parties 2A et 2B, sous la forme chacune d'une couche, d'épaisseur comprise par exemple entre 1 et 6 mm; entre les couches 2A et 2B de la pâte à farine est disposée une garniture référencée 3, elle-même disposée à l'intérieur d'un enrobage 4 apte à isoler la garniture 3 des couches de pâte 2A ou 2B.

Tout type de pâte à farine est susceptible de rentrer dans le cadre de l'invention telle que par exemple pâte feuilletée, brisée, sablée, à croissant, à pain, à pizza, à brioche, à beignet, à choux, pain dit libanais, feuille de brick, pâte fraîche. On entend par garniture un produit ou ensemble de produits alimentaires préparé ou non, tel que par exemple des farces à base de fromage, viande, poisson, fruits, légumes.

L'enrobage 4 selon l'invention, est apte à isoler la garniture 3 de la pâte 2A ou 2B, en formant une barrière mécanique, une barrière à l'eau et une barrière empêchant la migration de certains corps tels que des composés enzymatiques.

On a représenté deux couches 2A et 2B de la pâte, mais il est entendu que la composition de l'invention peut très bien ne comporter qu'une épaisseur de pâte; dans cette hypothèse l'ensemble garniture 3/enrobage 4 repose sur un seul fond de pâte 2B.

On note également le caractère extrêmement schématique de la figure 1; les formes et volumes des trois composants pâte à farine 2, garniture 3 et enrobage 4 peuvent être quelconque en fonction des besoins.

La pâte à farine 2 et la garniture 3 sont réalisées de manière connue en fonction de leur composition et type de préparation alimentaire que l'on veut réaliser.

Afin de permettre la conservation au froid de l'ensemble pâte 2/garniture 3, l'enrobage 4 présente une composition particulière, montrée schématiquement sur la figure 2 en coupe.

L'enrobage 4 porte ainsi une couche principale 5 formant barrière mécanique, d'épaisseur comprise par exemple entre 0,2 mm à 1 mm, et deux films 6 et 7, appliqués sur les deux faces respectives de la couche 5. Les films 6 et 7 constituent chacun une barrière destinée à empêcher le passage de l'eau.

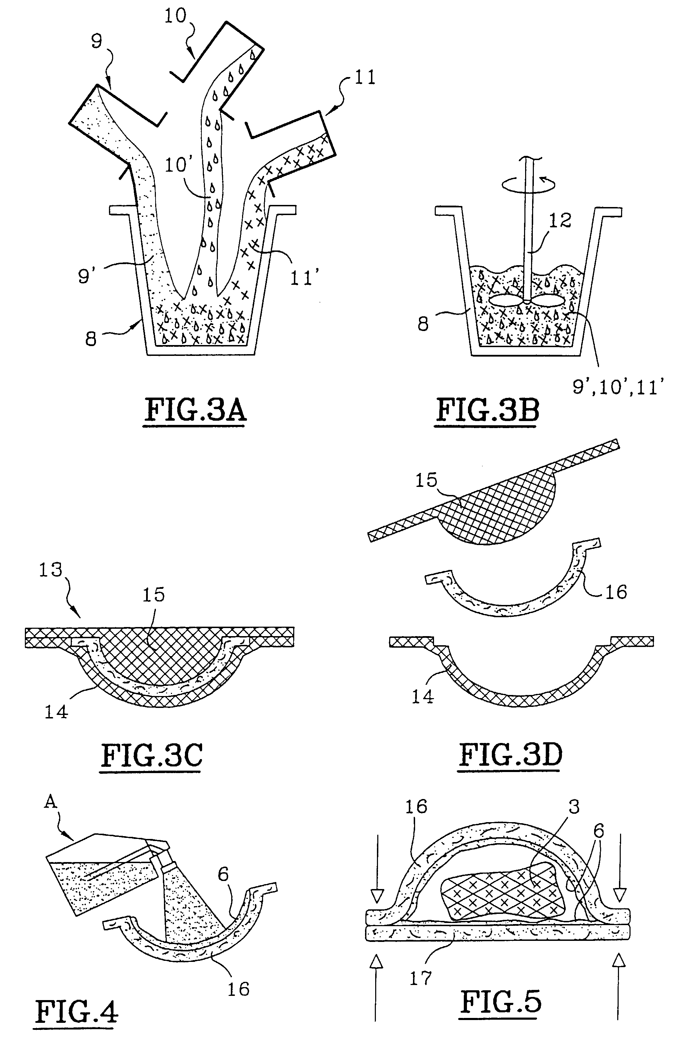

En référence aux figures 3 à 7, on décrit ci-après le procédé de fabrication de la composition de l'invention, et notamment l'enrobage 4.

La couche principale 5 (figure 2) constituant la barrière mécanique de l'enrobage 4 est réalisée de la manière suivante, selon l'invention, en référence aux figures 3A à 3D.

Dans un récipient adéquat 8, on mélange 60 à 90% d'eau à 40 à 10% de composants suivants appelés à constituer la barrière mécanique 5 :
- Un liant 9 comprenant de la farine, de l'amidon ou un mélange des deux mélange pouvant varier dans une proportion de 0 à 100%. La farine et l'amidon peuvent être du type blé, maïs, pomme de terre ou autre. La quantité de liant, par rapport aux autres composants, est comprise entre 70 et 100%, et de préférence entre 85 et 100% de la masse totale sèche de la barrière mécanique 5;
- De la matière grasse 10, représentant entre 0 et 30% et de préférence entre 0 et 15% de la matière sèche totale; la matière grasse comprend une huile végétale, qui peut être éventuellement hydrogénée, ou une graisse animale, ou un mélange des deux;
- Le troisième composant 11 est facultatif et comporte un émulsifiant (représentant entre 0 et 3% de la matière sèche.

Les quatre composants, à savoir l'eau 5 (non représentée), le liant 9', la matière grasse 10' et l'émulsifiant 11' sont versés dans le récipient 8.

On peut également, à titre facultatif, prévoir l'ajout d'autres ingrédients qui dépendent de la composition finale, et notamment de la garniture 3. Ces ingrédients divers peuvent représenter entre 0 et 8% et de préférence entre 0 et 3% de la matière sèche et comprennent par exemple des plastifiants (glycérol, sorbitol, ...), des sucres (saccharose, fructose), sel, oeuf, poudre de lait ou dérivé, aromes, colorants ou tout autre produit similaire.

Dans un second temps (figure 3B), le mélange 9', 10' et 11' est mélangé à l'aide d'un agitateur, du type à hélice par exemple, et portant la référence générale 12 et de type connu en soi. A titre d'exemple, le mélange peut durer entre 2 et 5 mn, et de préférence 3 mn, et ce à température ambiante; la vitesse de rotation du mélangeur peut être constante ou au contraire progressive.

Dans un troisième temps, le mélange ainsi obtenu est soumis à cuisson (figure 3C) en versant ledit mélange dans un moule chauffant 13, comprenant une paroi inférieure 14 et une paroi supérieure 15, délimitant un volume destiné à être occupé par le mélange 9'/10'/11'. Le moule est de type connu en soi. Dans l'exemple montré en coupe et de manière schématique sur la figure 3C, le moule présente une forme apte à permettre la réalisation par cuisson d'une coquille hémisphérique 16.

Sur la figure 3D, on montre de manière schématique le démoulage consistant en l'ouverture du moule, de manière connue, pour ensuite dégager la coquille 16 hémisphérique constituant une partie de la barrière mécanique 5 de l'enrobage 4.

Sur la figure 4, on a représenté de façon schématique l'étape suivante de réalisation de l'enrobage 4, consistant en l'application sur la paroi intérieure de la coquille 16, d'un film 6 constituant une barrière hydrophobe, destinée à empêcher le passage de l'eau. Le film est appliqué à l'aide d'un vaporisateur A de type connu en soi.

Le film constituant barrière à l'eau ainsi appliqué sur la paroi intérieure, c'est-à-dire celle destinée à être en contact avec la garniture 3, comporte une matière grasse ou un mélange de différentes matières grasses, avec éventuellement un ou plusieurs émulsifiant, dans une proportion de 0 à 20% de l'ensemble du film intérieur 6 constituant barrière à l'eau. A titre d'exemple, les matières grasses peuvent être du type animal ou végétal.

L'étape suivante (figure 5) consiste à réaliser un enrobage délimitant un volume intérieur fermé, dans lequel est disposé la garniture 3. Sur la figure 5, on a représenté à titre d'exemple un enrobage constitué de deux parties, à savoir une coquille hémisphérique 16, et une base circulaire 17, dont le diamètre est sensiblement le même que celui de la coquille. La base 17 est plane et est réalisée à l'aide d'un moule adéquat d'une manière similaire à celle de la coquille 16. On place la garniture 3 sur la base 17 et ensuite on dispose la coquille hémisphérique 16, de manière jointive avec le bord de la base circulaire 17.

On scelle les bords respectivement de la base 17 et de la coquille 16 par tout procédé connu, par pression à chaud ou à froid. Le fond 17 et la coquille 16 forment la barrière mécanique 5 de l'enrobage 4.

Selon une autre forme de réalisation (non représentée) la barrière mécanique 5 peut être consitutée de deux coquilles hémisphériques.

L'étape ultérieure, en référence à la figure 6, consiste à appliquer sur l'enrobage 4 réalisé, et plus particulièrement sur la face externe de celui-ci, un second film ou film externe 7, formant barrière à l'eau et constitué de matière grasse ou d'un mélange de matière grasse associée à un monoglycéride acétylé, la proportion pouvant varier de 0 à 100%.

Le second film ou film externe 7, constituant barrière à l'eau, est appliqué par vaporisation à l'aide d'un vaporisateur de type connu en soi et référencé B et apte à délivrer un nuage 20 de gouttelettes ou particules fines constituées du mélange de matières grasses mentionné ci-dessus.

On a réalisé ainsi l'enrobage 4 à l'intérieur duquel est disposée la garniture 3.

Sur la figure 7, on a représenté de manière schématique l'ultime étape de réalisation de la composition de l'invention, dans laquelle on place l'ensemble garniture 3/enrobage 4, dans un volume de préférence fermé, défini par une couche de pâte à farine 2 refermée sur elle-même.

Il est entendu que les compositions et les formes des différents composants peuvent varier sans sortir du cadre de l'invention.

La composition ainsi réalisée peut être conservée au froid positif (12 à 14°C) pendant au moins 30 jours, et également être conservée à l'état surgelé, sans perdre aucune des qualités organoleptiques et bactériologiques de l'ensemble, compte tenu des propriétés de barrière à l'eau et de barrière mécanique, ainsi que barrière empêchant la migration ou l'activité des enzymes, de l'enrobage 4.

Egalement à noter que l'enrobage 4 est constitué et réalisé de manière à ne pas être perçu au goût à la cuisson de l'ensemble pâte 2/ garniture 3/ enrobage 4, lors de la consommation par l'utilisateur final.

On peut également envisager de réaliser l'enrobage 4 et son contenu (garniture intérieure) et conserver l'ensemble au froid (positif ou surgelé), pour metter en place ultérieurement l'ensemble enrobage/garniture dans une coque de pâte à farine; l'ensemble pâte à farine/enrobage/garniture peut être cuit de suite ou lui-même conservé au froid.

## Revendications

1. Composition alimentaire fraîche à consommation différée, susceptible d'être conservée au froid positif ou à l'état surgelé, comprenant une pâte (2) à farine prête à cuire, une garniture (3) intérieure et un enrobage (4) comprenant de la matière grasse et apte à isoler ladite garniture (3) de ladite pâte (2), caractérisé en ce que ledit enrobage (4) est composé d'au moins deux couches, à savoir une première couche constituant une barrière mécanique (5), et au moins une seconde couche (6, 7) constituant barrière à l'eau, l'enrobage formant, après cuisson, au moins une coquille.

2. Composition selon la revendication 1, caractérisée en ce que la couche (5) constituant la barrière mécanique est réalisée à partir d'un mélange, d'un liant (9) (farine, amidon) et de matière grasse (1)(huile végétale ou animale).

3. Composition selon la revendication 2, caractérisée en ce que la proportion dans la composition finale de l'enrobage (4), de liant (9) est comprise entre 10 et 40%, et de préférence entre 30 et 35%, et la matière grasse (10) représente entre 0 et 30%, et de préférence entre 0 et 20% de la matière sèche totale constituant la barrière mécanique (5), le liant (9) étant constitué d'un mélange de farine et d'amidon dont les proportions varient entre 0 et 100%.

4. Composition selon l'une des revendications 2 ou 3, caractérisée en ce que la couche constituant la barrière mécanique (5) contient également un émulsifiant (11), entre 0 et 2% de la matière sèche totale, et éventuellement d'autres ingrédients, entre 0 et 5% de la matière sèche totale.

5. Composition selon l'une des revendications 1 à 4, caractérisée en ce que la couche (6,7) formant barrière à l'eau comporte de la matière grasse.

6. Composition selon l'une des revendications 2 à 5, caractérisée en ce que la couche de barrière à l'eau est réalisée sous la forme de deux films (6,7) appliqués sur les faces respectivement interne et externe de la couche (5) formant barrière mécanique de l'enrobage (4).

7. Procédé de fabrication d'un enrobage pour une garniture (3) intérieure d'une composition alimentaire, dans lequel :
◆ on mélange un liant (9) (farine, amidon ou mélange des deux) avec de la matière grasse (10) (animale ou végétale) et de l'eau, auquel on ajoute éventuellement un émulsifiant (11) ou d'autres ingrédients; on soumet à cuisson le mélange ainsi réalisé, pour former un enrobage (4) délimitant un volume intérieur apte à recevoir ladite garniture;
◆ on applique (A) sur la paroi interne, destinée à venir en contact ou placé en regard de la garniture (3), de l'enrobage (4), au moins un premier film (film interne) (6) de barrière à l'eau, comprenant de la matière grasse; et
◆ on dispose à l'intérieur du volume défini par l'enrobage (4), la garniture (3) et on scelle les bords de l'enrobage (4).

8. Procédé selon la revendication 7, caractérisé en ce qu'en outre on enduit la surface extérieure de l'enrobage (4) fermé, d'un second film ou film externe (7) constituant barrière à l'eau, et comprenant de la matière grasse.

9. Procédé selon l'une des revendications 7 ou 8, caractérisé en ce que l'on dispose l'ensemble garniture (3)/enrobage (4) sur une couche de pâte (2) à farine, ou dans un volume défini par ladite couche refermée sur elle-même.
